Europäisches Patentamt

European Patent Office

Office européen des brevets

(19)

(11) **EP 1 386 936 A1**

(12) **EUROPÄISCHE PATENTANMELDUNG**

(43) Veröffentlichungstag:
**04.02.2004 Patentblatt 2004/06**

(51) Int Cl.7: **C08G 18/10, C08G 18/70**

(21) Anmeldenummer: **02405662.4**

(22) Anmeldetag: **30.07.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(71) Anmelder: **Abend, Thomas**
**CH-9010 St. Gallen (CH)**

(72) Erfinder: **Abend, Thomas**
**CH-9010 St. Gallen (CH)**

(74) Vertreter: **Welch, Andreas et al**
**Hepp Wenger Ryffel AG**
**Friedtalweg 5**
**9500 Wil (CH)**

(54) **Verfahren und Zusammensetzung zur Herstellung reaktiver Schmelzmassen auf Basis von oberflächendesaktivierten festen Isocyanaten und Polymeren mit funktionellen Gruppen**

(57)    Die vorliegende Erfindung betrifft ein Verfahren zur Herstellung einer schmelzbaren heisshärtenden Zusammensetzung, umfassend mindestens ein Polymer mit isocyanatreaktiven Gruppen und mindestens ein an der Oberfläche desaktiviertes, festes Polyisocyanat, gekennzeichnet durch die Schritte a) Bereitstellung mindestens eines an der Oberfläche desaktivierten festen Polyisocyanats (A), welches unter den Reaktionsbedingungen bei den Schritten a) und b) inert ist; b) Dispergieren des mindestens einen Polyisocyanats (A) in mindestens einer Komponente (B), ausgewählt aus der Gruppe bestehend aus Monomeren, Oligomeren, Prepolymeren und niedermolekularen Polymeren mit funktionellen Gruppen (b'), unter Erhalt einer Reaktionsmischung (i); c) Zugabe einer Reaktionsmischung (ii) umfassend mindestens eine Komponente (C), ausgewählt aus der Gruppe bestehend aus Monomeren, Oligomeren, Prepolymeren und niedermolekularen Polymeren mit funktionellen Gruppen (c'), zur Reaktionsmischung (i), wobei durch die Reaktion der Komponenten (B) und (C) mindestens ein Oligomer oder Polymer (D) mit isocyanatreaktiven Gruppen (d') mit einem höheren Molekulargewicht als die Komponenten (B) oder (C) erhalten wird, wobei das mindestens eine Polyisocyanat (A) in dem mindestens einem Oligomer oder Polymer (D) dispergiert ist, sowie auf dadurch erhältliche heisshärtende Zusammensetzungen und Kunststoffe.

EP 1 386 936 A1

Printed by Jouve, 75001 PARIS (FR)

**Beschreibung**

Die Erfindung betrifft heisshärtende Zusammensetzungen aus Polymeren mit isocyanatreaktiven Gruppen und an der Oberfläche desaktivierten, festen Polyisocyanaten, ein Verfahren zu deren Herstellung, sowie die Verwendung dieser Zusammensetzungen als schmelzbare thermoreaktive Massen, Schmelzkleber und Beschichtungsmittel.

Reaktive Schmelzkleber und Schmelzbeschichtungen sind vor allem in der Form von Produkten verbreitet, welche feuchtigkeitsreaktive und -vernetzende Gruppen enthalten. Die Mehrzahl dieser Produkte weist Isocyanat- und Siloxangruppen auf, welche nach Hydrolyse nicht nur die Vernetzung herbeiführen, sondern auch zur Haftung beitragen. Nachteilig bei diesen Produkten ist, dass sie aufgrund ihrer Beschaffenheit vor der Verarbeitung in feuchtigkeitsundurchlässigen Vorrichtungen gelagert werden müssen. Da sie an der Luft durch Feuchtigkeit spontan vernetzen, können sie nicht als latent-reaktive vorapplizierte Schichten oder Pulver auf Substrate aufgetragen werden.

Es wurde deshalb eine Reihe von vorapplizierbaren reaktiven Schmelzklebern und Massen vorgeschlagen. Eine der Möglichkeiten zur Realisierung derartiger Produkte besteht in der Verwendung von festen Polyisocyanaten, welche nicht feuchtigkeitsreaktiv sind, aber mit funktionellen Gruppen bei erhöhter Temperatur reagieren können. Nicht feuchtigkeitsempfindliche Polyisocyanate kann man erhalten, indem man die Oberfläche der festen, pulverförmigen Isocyanate mit Mono-, Di- oder Polyaminen desaktiviert. Diese Vorgehensweise ist beispielsweise in der EP-A-0 062 780 und der EP-A-0 103 323 beschrieben, auf deren diesbezüglichen Inhalt hiermit ausdrücklich Bezug genommen wird.

Durch Reaktion der an der Oberfläche der Isocyanatpartikel befindlichen Isocyanatgruppen mit Aminen oder Polyaminen entsteht auf der Oberfläche der Isocyanatpartikel eine Schicht aus inertem unlöslichem Harnstoff oder Polyharnstoff. Diese reagiert bei Raumtemperatur weder mit Feuchtigkeit noch mit den funktionellen Gruppen des als Reaktionspartner in der Mischung vorhandenen Polymers. Man erhält ein latent thermoreaktives System, welches bei Raumtemperatur (auch an der Luft) stabil ist. Bei Erreichen einer Vernetzungstemperatur (auch Aufdickungstemperatur genannt) wird die inerte Schicht durchlässig bzw. zerstört, und es kommt zur Reaktion der Isocyanatgruppen mit den funktionellen isocyanatreaktiven Gruppen. Als "Aufdickungstemperatur" ist diejenige Temperatur definiert, bei der unter langsamem Aufheizen (ca. 10 °C / min.) eine flüssige Mischung infolge der Reaktion von festem Polyisocyanat und Verbindungen mit isocyanatreaktive Gruppen pastenförmige Konsistenz unter Verfestigung annimmt.

In der EP-A-0 103 323 sind auch Zusammensetzungen beschrieben, welche neben festen oberflächendesaktivierten Isocyanaten feste hydroxyfunktionelle Polyester mit einem Molekulargewicht bis 6000 Da enthalten. Es werden hierbei Polyester mit einem Schmelzpunkt bis 65 °C eingesetzt. Zum Einmischen und Homogenisieren der desaktivierten pulverförmigen Isocyanate muss die Temperatur des Reaktionsgemisches über den Schmelzpunkt des funktionellen Polymers, d. h. bis auf über 70 °C erhöht werden. Diese Temperatur ist schon nahe an der Vernetzungstemperatur von 80 °C bis 120 °C. Es besteht somit die Gefahr, bereits während dieses Schritts die Reaktion zwischen dem Polyisocyanat und dem Polyester auszulösen. Bei der Dispergierung der festen oberflächendesaktivierten Isocyanate in der Polyesterkomponente werden zudem die Isocyanate hohen Scherkräften unterworfen, was zur Destabilisierung des latentreaktiven Systems infolge Abtragung der an der Oberfläche befindlichen inerten Polyharnstoffschicht beitragen kann. Es besteht daher die Gefahr, unter diesen Bedingungen das gewünschte lagerstabile latentreaktive System nicht zu erhalten, sondern bereits die Vernetzung zum Polyurethan zu initiieren.

Bei Raumtemperatur lagerstabile, latent thermoreaktive Massen in Pulverform kann man gemäss der EP-A-0 431 413 erhalten, indem man ein Gemisch von geschmolzenem, hydroxyfunktionellem Polyester und oberflächenstabilisiertem pulverförmigen Diisocyanat in einem gekühlten flüssigen Kohlenwasserstoff dispergiert, welcher einen polymeren Emulgator enthält. Nach dem Erstarren des Gemisches aus Polyester und festem Isocyanat wird das Pulver vom Lösungsmittel abgetrennt.

Bei dieser Herstellungsmethode werden funktionelle schmelzbare Polymere mit einem relativ niedrigem Molekulargewicht von maximal 6000 Da eingesetzt. Die daraus erhältlichen Produkte sind als Schmelzkleber ungeeignet, da ihre Schmelzviskosität sehr niedrig ist. Zudem werden bei der Herstellung grössere Mengen von brennbaren Lösungsmitteln verwendet, welche wiedergewonnen werden müssen.

In der WO 93/25599 ist ein Weg zur Herstellung thermoreaktiver Schmelzkleber auf Basis von oberflächendesaktivierten Polyisocyanaten und funktionellen Polymeren beschrieben. Die eingesetzten Polymere können auch Molekulargewichte von über 6000 Da aufweisen, was zu Produkten mit höheren Schmelzviskositäten und Anfangsfestigkeiten der Verklebung führen kann. Die Herstellung des latent reaktiven Gemisches aus oberflächendesaktivierten Isocyanaten und funktionellem Polymer ist mit höheren Schmelzviskositäten und Temperaturen verbunden. Dem Fachmann ist bekannt, dass die Oberflächendesaktivierung der festen Isocyanate durch die Einwirkung von Scherkräften und höheren Temperaturen beeinträchtigt wird. Unter diesen Umständen kommt es zu einer zumindest teilweisen Abtragung oder Zerstörung der inerten Schicht auf der Oberfläche der Isocyanatpartikel, worunter die Lagerstabilität des unvernetzten Produktes leiden kann.

In der WO 93/25599 wird diesen negativen Effekten dadurch begegnet, dass nur eine Teilmischung erzeugt sowie ein Überschuss an Desaktivierungsmittel verwendet wird. Die latent reaktive Schmelzmasse wird so erzeugt, dass eine erste Komponente aus a) geschmolzenen hydroxy- oder aminofunktionellem Polymer und eine zweite Komponente aus b) oberflächendesaktivierten Polyisocyanat, dispergiert in einem niederschmelzenden Polymer oder Weichmacher, bei erhöhten Temperaturen in einem statischen Mischer mit reduzierter Anzahl von Mischelementen partiell gemischt wird. Dadurch werden die Mischkomponenten in geringerem Masse höheren Temperaturen und Scherkräften ausgesetzt. Das Teilgemisch wird aus dem statischen Mischer ausgetragen und vor der Weiterbearbeitung gekühlt. Die Eigenschaften der Schmelzmasse werden im wesentlichen durch die Eigenschaften des funktionellen Polymers bestimmt. Es entsteht ein festes Teilgemisch aus Bereichen, welche a) reich sind an funktionellen Polymeren und solchen, in denen b) die Konzentration an desaktivierten Isocyanaten hoch ist.

Nachteilig bei diesem Verfahren ist, dass

- das Molekulargewicht des einzusetzenden Polymers durch die Schmelz- und Mischviskosität begrenzt ist
- die Mischtemperatur auf Grund der Reaktivität des desaktivierten festen Isocyanats limitiert ist
- gewisse Verarbeitungsverfahren der Schmelze durch die entstehende hohe Schmelzviskosität unmöglich sind, und
- dass bei der späteren Heissvernetzung die Diffusionswege für das Isocyanat auf Grund der inhomogenen Mischung erhöht sind. Dadurch leidet die Reaktivität und die Umsetzung zu vernetzten Massen.

Es war die Aufgabe der vorliegenden Erfindung, ein Verfahren zur Herstellung latentreaktiver lagerstabiler Schmelzkleber und Schmelzbeschichtungen bereitzustellen, bei welchem einerseits die vorstehend beschriebenen nachteiligen Einschränkungen hinsichtlich der Ausgangsstoffe und der Reaktionsbedingungen vermieden und andererseits Produkte erhalten werden können, die nicht unter den vorstehend beschriebenen Beeinträchtigungen ihrer Reaktivität leiden.

Es wurde nun gefunden, dass die Nachteile der bekannten Verfahren durch die vorliegende, in den unabhängigen Ansprüchen definierte Erfindung vermieden werden können und somit die erfindungsgemässe Aufgabe gelöst werden kann.

Die vorliegende Erfindung betrifft ein Verfahren zur Herstellung einer bei Temperaturen oberhalb Raumtemperatur schmelzbaren, heisshärtenden Zusammensetzung, umfassend mindestens ein Polymer mit isocyanatreaktiven Gruppen und mindestens ein an der Oberfläche desaktiviertes, festes Polyisocyanat, gekennzeichnet durch die Schritte

a) Bereitstellung einer Reaktionsmischung (i), enthaltend mindestens eine Komponente (B), ausgewählt aus der Gruppe bestehend aus Monomeren, Oligomeren, Prepolymeren und niedermolekularen Polymeren mit funktionellen Gruppen (b'), sowie ein an der Oberfläche desaktiviertes festes Polyisocyanat (A), welches unter den Reaktionsbedingungen bei den Schritten a) und b) inert ist und in der Komponente (B) dispergiert ist;

b) Zusammenfügen einer Reaktionsmischung (ii) umfassend mindestens eine Komponente (C), ausgewählt aus der Gruppe bestehend aus Monomeren, Oligomeren, Prepolymeren und niedermolekularen Polymeren mit funktionellen Gruppen (c'), mit der Reaktionsmischung (i), wobei durch die Reaktion der Komponenten (B) und (C) mindestens ein Oligomer oder Polymer (D) mit isocyanatreaktiven Gruppen (d') mit einem höheren Molekulargewicht als die Komponenten (B) oder (C) erhalten wird, wobei das mindestens eine Polyisocyanat (A) in dem mindestens einem Oligomer oder Polymer (D) dispergiert ist.

Das erfindungsgemässe Verfahren unterscheidet sich vom Stand der Technik dadurch, dass das Polymer (D) mit den isocyanatreaktiven Gruppen (d') erst nach dem Vermischen mit der Reaktionsmischung, welche das oberflächendesaktivierte feste Polyisocyanat (A) enthält, durch eine chemische Reaktion aufgebaut wird. Dies erfolgt durch Dispergieren des Polyisocyanats (A) in einem Ausgangsstoff (B) des isocyanatreaktiven Polymers (D) und anschliessende Zugabe des oder der anderen Ausgangsstoffe (C) des isocyanatreaktiven Polymers (D). Auf diese Weise kann die Dispersion des Polyisocyanats (A) in einem Ausgangsstoff (B) des isocyanatreaktiven Polymers (D) unter sehr milden Bedingungen erfolgen (geringe Scherkraft, geringe Temperaturbelastung). Hierbei muss das oberflächendesaktivierte feste Polyisocyanat (A) so gewählt werden, dass es sich bei der Kettenverlängerungsreaktion zur Ausbildung des isocyanatreaktiven Polymers (D) und während der Lagerung bei Raumtemperatur inert verhält. Nach dem Mischen und der Kettenverlängerungsreaktion tragen die daraus resultierenden Polymere (D) isocyanatreaktive Gruppen (d'), welche unter den Vernetzungsbedingungen mit den Isocyanatgruppen des festen Isocyanats (A) reagieren können.

Das Verfahren gemäss der vorliegenden Erfindung hat somit die Vorteile gegenüber dem Stand der Technik,

- dass die Mischtemperatur und die Viskosität beim Mischen der Komponenten der Reaktionsmischung niedrig gehalten werden kann,
- dass bei der Verarbeitung der Reaktionsmischung keine grossen Scherkräfte auf das oberflächendesaktivierte feste Polyisocyanat (A) einwirken,
- dass es während der Herstellung latentreaktiver Klebmassen zu weniger Druckabfall in den Förder-, Misch und Applikationsanlagen kommt,

- dass homogene Mischungen erzeugt werden können, welche mehr Reaktivität zeigen, da keine grossen Diffusionwege zwischen den Reaktionspartnern zu überwinden sind,
- dass Applikationsverfahren angewandt werden können, für die eine niedrige Viskosität der Reaktionsmischung Voraussetzung ist, zum Beispiel (graphische) Druckverfahren, Breitschlitzextrusion, Atomisation durch rotierende Scheiben, Spin-spraying, elektrostatisches Versprühen, Bildung von Pulvern durch Versprühen durch Ink-Jet Düsen,
- dass auf Grund des möglichen Einsatzes von kettenverlängernden Komponenten mit höherem Molekulargewicht eine geringere Menge des teuren festen Isocyanats eingesetzt werden muss.

Eine besonders vorteilhafte Ausführungsform der vorliegenden Erfindung ist nachfolgend beschrieben.

Es werden mindestens zwei Reaktionsmischungen bereitgestellt, welche bei Raumtemperatur oder bei erhöhten Temperaturen im ungemischten Zustand stabil sind. Eine Reaktionsmischung, welche oberflächendesaktiviertes Polyisocyanat enthält, ist bis zu einer Temperatur unterhalb der Vernetzungstemperatur des Polyisocyanats stabil. In Abhängigkeit von den funktionellen Gruppen und der Struktur des Polymers müssen die Reaktionsmischungen bis zur Mischung in feuchtigkeitsundurchlässigen Gebinden gelagert werden.

Gemäss der vorliegenden Erfindung wird deshalb ein Kit bzw. Kitof-parts bereitgestellt, umfassend mindestens zwei voneinander getrennte Kompartimente, wobei ein erstes Kompartiment eine Reaktionsmischung (i), umfassend mindestens ein an der Oberfläche desaktiviertes festes Polyisocyanat (A) und mindestens eine Komponente (B), ausgewählt aus der Gruppe bestehend aus Monomeren, Oligomeren und niedermolekularen Polymeren mit funktionellen Gruppen (b'); und ein zweites Kompartiment eine Reaktionsmischung (ii) umfassend mindestens eine Komponente (C), ausgewählt aus der Gruppe bestehend aus Monomeren, Oligomeren und niedermolekularen Polymeren mit funktionellen Gruppen (c'), enthält.

Gemäss der vorliegenden Erfindung können die Komponenten aber auch erst unmittelbar vor Herstellung der heisshärtenden Zusammensetzung bereitgestellt werden.

Eine erste Reaktionsmischung (i) umfasst oberflächendesaktiviertes festes Isocyanat (A) sowie eine Komponente (B), ausgewählt aus der Gruppe bestehend aus Monomeren, Oligomeren, Prepolymeren und niedermolekularen Polymeren mit funktionellen Gruppen (b').

Eine zweite Reaktionsmischung (ii) umfasst eine Komponente (C), ausgewählt aus der Gruppe bestehend aus Monomeren, Oligomeren, Prepolymeren und niedermolekularen Polymeren mit funktionellen Gruppen (c').

Gemäss der vorliegenden Erfindung haben die nachstehenden Begriffe folgende Bedeutung:

Oligomer: Eine Verbindung, die aus mindesten 3, maximal aus 10 monomeren Bauteilen aufgebaut ist und ein Molekulargewicht von maximal 1000 g/Mol aufweist.

Prepolymer: Ein Voraddukt, Oligomer oder niedermolekulares Polymer mit funktionellen Gruppen, die bei der Kettenverlängerung, Polymersynthese oder Vernetzung am Aufbau des Polymeren beteiligt sind.

Niedermolekulares Polymer: Polymer mit einem Molekulargewicht im Bereich von 1'000 bis 30'000 g/Mol.

Wenn die beiden Reaktionsmischungen (i) und (ii) gemischt werden, kommt es zu einer Kettenverlängerungsreaktion unter Bildung eines bei Temperaturen oberhalb Raumtemperatur schmelzbaren, latent reaktiven Produkts mit höherem Molekulargewicht als die Ausgangskomponenten (B) oder (C), umfassend ein niedermolekulares Polymer oder Polymer (D) mit isocyanatreaktiven Gruppen (d') und dem unreagierten oberflächendesaktivierten festen Isocyanat (A), welches im Polymer (D) dispergiert ist.

Vorzugsweise handelt es sich bei den isocyanatreaktiven Gruppen (d') um Hydroxyl-, primäre oder sekundäre Aminogruppen. Besonders bevorzugt liegen nach der vollständigen Kettenverlängerungsreaktion unter Bildung des Polymers (D) die Isocyanatgruppen des Polyisocyanats (A) gegenüber den isocyanatreaktiven Gruppen (d') im Überschuss vor.

Als Polyisocyanate für das erfindungsgemässe Verfahren sind alle Di- oder Polyisocyanate oder deren Gemische geeignet, sofern sie einen Schmelzpunkt oberhalb 40°C aufweisen und sich durch bekannte Methoden in Pulverform mit Teilchengrössen unter 200 μm überführen lassen. Erfindungsgemäss bevorzugt sind aliphatische, cycloaliphatische oder aromatische Polyisocyanate. Als Beispiele seien genannt: Dimeres 2,4- oder -4,4'-Diphenylmethandiisocyanat (MDI-U), Naphthalin-1,5-diisocyanat (NDI), 3,3'-Dimethylbiphenyl-4,4'-diisocyanat (TODI), dimeres 1-Methyl-2,4-phenylendiisocyanat (TDI-U), 3,3'-Diisocyanato-4,4'-dimethyl-N,N'diphenylharnstoff (TDIH), Urethane erhältlich durch Umsetzung von 2 Mol 1,6-Hexamethylendiisocyanat und 1 Mol eines kurzkettigen linearen Diols, sowie das Isocyanurat des IPDI (IPDI-T).

Um eine unkontrollierte und spontane Reaktion zwischen dem pulverförmigen, festen Isocyanat (A) und den funktionellen Gruppen der Polymeren (B), (C) und (D) zu verhindern, werden die pulverförmigen, festen Isocyanate an ihrer Oberfläche desaktiviert. Das Desaktivierungsmittel wird so gewählt, dass es an der Oberfläche der Isocyanatteilchen durch chemische Reaktion gebunden wird und auf diese Weise eine reaktionsverhindernde Phasentrennung zwischen den Polyisocyanatteilchen und den übrigen reaktiven Komponenten bewirkt. Die Oberflächendesaktivierung von festen Isocyanaten ist beispielsweise in der EP-A-0 062 780 und EP-A-0 103 323 sowie in Blum, R.; Schupp, H., Prog. Org. Coat. 1990, 18(3), 275 - 288 beschrieben. Auf den diesbezüglichen Inhalt dieser Dokumente wird hiermit ausdrücklich Bezug genommen.

Für die Desaktivierung der Isocyanatgruppen des festen Isocyanates (A) werden 0,1 bis 25 %, insbesondere 0,2 bis 10 % (Equivalentprozent) der vorhandenen Isocyanatgruppen des festen Isocyanats mit dem Desaktivierungsmittel umgesetzt. Die optimale Konzentration des Desaktivierungsmittels ist entsprechend dem Verwendungszweck der reaktiven Schmelzmasse, den Lagerbedingungen und der Korngrösse des festen Isocyanats experimentell zu ermitteln.

Die festen Polyisocyanate (A) werden vorzugsweise durch Einwirkung von primären und sekundären aliphatischen Aminen, Dioder Polyaminen, Hydrazinderivaten, Amidinen oder Guanidinen desaktiviert. Weitere Desaktivierungsmittel sind in den oben zitierten Patentschriften aufgezählt.

Für die Desaktivierung haben sich besonders bewährt: Ethylendiamin, 1,3-Propylendiamin, Diethylentriamin, Triethylentetramin, bis-Hexamethylentriamin, 2,5-Dimethylpiperazin, 3,3'-Dimethyl-4,4'-Diaminodicyclohexylmethan, Methylnonandiamin, Isophorondiamin, 4,4'-Diaminodicyclohexylmethan, Diamino- und Triaminopolypropylenether (*Jeffamine,* Huntsman Corp.), Polyamidoamine (*Euretek,* Vantico AG), Polyethylenimin, Aminoalkylalkoxysilane, Diazabicyclononen, Diazabicyclo-undecen, und Gemische von Mono-, Di- und Polyaminen.

Die Desaktivierungsreaktion kann auch in Gegenwart von Verbindungen mit funktionellen Gruppen vorgenommen werden, welche gegenüber Isocyanatgruppen deutlich weniger reaktiv sind als die Desaktivierungsmittel. Beispielsweise kann die Desaktivierung von festen Isocyanaten mit aliphatischen Diaminen in Gegenwart von Hydroxyl-, aromatischen, oder sterisch gehinderten aromatischen Aminogruppen erfolgen, ohne dass es zu einer nennenswerten Reaktion zwischen den Isocyanatgruppen und den Hydroxyl- oder aromatischen Aminogruppen kommt.

Auch die Desaktivierung in einem inerten Lösungsmittel oder Wasser, welches nach der Desaktivierung wieder abgetrennt oder durch eine andere flüssige Phase wie zum Beispiel Weichmacher, Polyol oder Polyamin ersetzt wird, liefert die gewünschten oberflächendesaktivierten Isocyanate.

Die Desaktivierungsreaktion der festen Isocyanate kann auch unter den Bedingungen vorgenommen werden, welche in der EP-A-0 162 364 und EP-A-0 165 437 beschrieben sind.

Als Oligomere oder Polymere, welche funktionelle oder isocyanatreaktive Gruppen aufweisen, eignen sich zur Durchführung des erfindungsgemässen Verfahrens beispielsweise: Aliphatische oder aromatische Polyester, Polycaprolactone, Polycarbonate, Polyacetale, Polyacrylate und -methacrylate, Polyamide, Polyurethane, Polyharnstoffe, Polypropylenether, Polytetrahydrofuran, Polythioether, Polybutadiene, hydrierte Polybutadiene, Fettsäure-basierende Polyester, sowie hydroxyund/oder aminofunktionelle Addukte und Derivate von Epoxydharzen.

Es können auch Gemische der vorstehend genannten Polymere eingesetzt werden.

Niedermolekulare aliphatische oder aromatische, hydroxy- oder aminofunktionelle Vernetzungs- oder Kettenverlängerungsmittel mit einem Molekulargewicht von 60 bis 500 und Funktionalität 2 bis 4, können gemäss der vorliegenden Erfindung ebenfalls verwendet werden.

Besonders geeignet sind auch aromatische oder sterisch gehinderte aromatische Polyamine. Diese können als Kettenverlängerungsmittel mit Isocyanatprepolymeren, unter Harnstoffbildung reagieren. Es entstehen aminoterminierte Prepolymere mit einer starken Tendenz zu (thermisch reversibler) Phasenseparation, auch im unvernetzten Zustand. Beim Einsatz von relativ hydrophilen aminoterminierten Prepolymeren auf Polyetherbasis reagiert das oberflächendesaktivierte feste Isocyanat bei der Vernetzung bevorzugt mit den aromatischen Aminogruppen des aromatischen oder sterisch gehinderten aromatischen Polyamins, und nicht mit den Hydroxylgruppen der Feuchtigkeit im System. Durch Vermeidung dieser Nebenreaktion entsteht kein oder wenig Kohlendioxyd, und damit keine Blasen in der vernetzenden Masse.

Gemäss einer bevorzugten Ausführungsform kann die erfindungsgemässe Zusammensetzung unmittelbar nach Mischen der beiden Reaktionsmischungen (i) und (ii), d.h. im "frischen" Zustand, in Wasser dispergiert werden. Das Wasser behindert die Kettenverlängerungsreaktion zwischen den Komponenten (B) und (C) nicht. Es entsteht ein heissvernetzendes Pulver.

Darüber hinaus können die Komponenten (B) und (C) auch aus den Monomeren der vorstehend beschriebenen Oligomere oder Polymere ausgewählt sein. Weiterhin kann es sich bei den Komponenten (B) und (C) um Prepolymere handeln, die aus monomeren Bauteilen aufgebaut worden sind.

Die Zahl der Gruppen pro Polymermolekül, welche zur Kettenverlängerung oder Vernetzung beitragen können, soll im Durchschnitt zwischen 2 und 6 liegen, die Molekulargewichte vor der Kettenverlängerungsreaktion im Bereich von 1'000 bis 30'000 Da.

In mindestens einer Komponente (B) oder (C) können ein oder mehrere schmelzbare Oligomere oder Polymere verwendet werden, wobei der Schmelz- oder Erweichungspunkt bzw. der Erstarrungspunkt über 40 °C liegen soll. Oberste Grenze für den Schmelz- oder Erweichungspunkt der Oligomere oder Polymere ist die Vernetzungs- oder "Aufdickungstemperatur" des oberflächendesaktivierten Isocyanats.

Die Komponente (B), welche aus den vorstehend beschriebenen Substanzen ausgewählt sein kann, muss in der Lage sein, das Polyisocyanat (A) unter Bedingungen zu dispergieren, bei denen es nicht zu einer Abtragung der desaktivierenden Oberflächenschicht des Polyisocyanats kommt, d.h. die Dispergierung muss ohne grössere Erwärmung und ohne Anwendung erheblicher Scherkräfte erreichbar sein. Zudem dürfen unter Lagerungsbedingungen bzw. unter den Dispergierbedingungen die funktionellen Gruppen der Komponente (B) nicht mit den Isocyanatgruppen des Polyisocyanats (A) reagieren. Bei den funktionellen Gruppen der Komponente (B) kann es sich auch um isocyanatreaktive Gruppen oder um Isocyanatgruppen handeln.

Die Komponente (C) ist so auszuwählen, dass sie reaktive Gruppen (c') umfasst, welche mit den funktionellen Gruppen (b') der Komponente (B) bei Kettenverlängerungstemperaturen reagieren, sobald die Komponenten (B) und (C) gemischt werden. Die Komponente (C) ist zudem so auszuwählen, dass ihre reaktiven Gruppen (c') bei den Kettenverlängerungstemperaturen nicht mit den Isocyanatgruppen des Polyisocyanats (A) reagieren.

Gemäss einer besonders bevorzugten Ausführungsform der vorliegenden Erfindung weist die Komponente (C) in der Reaktionsmischung (ii) als funktionelle Gruppen (c') Isocyanatgruppen von aromatischen, cycloaliphatischen und aliphatischen Di- oder Polyisocyanaten auf. Monomere, Oligomere, Prepolymere oder niedermolekulare Polymere (C) sind hierbei ausgewählt aus der Gruppe bestehend aus Hexamethylendiisocyanat (HDI), Trimethyltriisocyanatohexan (TMDI), Dimersäurediisocyanat (DDI), Isophorondiisocyanat (IPDI), Bis-(4-isocyanatocyclohexyl)methan (H12MDI), Tetramethylxylylendiisocyanat (TMXDI), Xylylendiisocyanat (XDI), hydriertem Xylylendiisocyanat (H6XDI), 2,4- und/oder 2,6-Toluylendiisocyanat (TDI), Diphenlymethan-2,4'- und/oder 4,4'diisocyanat (MDI), deren Urethane, Biurete, Isocyanurate, Allophanate, Uretdione, Carbodiimide, sowie Gemischen von Polyisocyanaten, und/oder Prepolymeren oder Quasiprepolymeren die man erhält, wenn ein Überschuss von Polyisocyanaten mit den Monomeren, Oligomeren, oder niedermolekularen Polymeren aus der Gruppe bestehend aus aliphatischen oder aromatischen Polyestern, Polycaprolactonen, Polycarbonaten, Polyacetalen, Polyacrylaten und -methacrylaten, Polyamiden, Polyurethanen, Polyharnstoffen, Polypropylenethern, Polytetrahydrofuranen, Polythioethern, Polybutadienen, hydrierten Polybutadienen, Fettsäure-basierenden Polyestern, hydroxy- und/oder aminofunktionellen Addukten und Derivaten von Epoxydharzen, umgesetzt werden.

Als Mechanismen für die Kettenverlängerungsreaktion können beispielsweise genannt werden:

Reaktion von primären oder sekundären Hydroxylgruppen mit einem Unterschuss an Isocyanatgruppen aus Polyisocyanaten oder Isocyanatprepolymeren.

1. Reaktion von aliphatischen Aminogruppen mit einem Unterschuss an aliphatischen Isocyanatgruppen aus Polyisocyanaten oder Isocyanatprepolymeren
2. Reaktion von aromatischen Aminogruppen oder von sterisch gehinderten Aminogruppen mit aliphatischen oder aromatischen Isocyanatgruppen aus Polyisocyanaten oder Isocyanatprepolymeren
3. Addition von Aminogruppen aus Aminoalkoholen an niedermolekulare acrylterminierte Polyurethan- oder Epoxypolymere (Michael-Addition)
4. Gleichzeitig ablaufende Kettenverlängerungsmechanismen der vorgenannten Reaktionen 1 bis 4, zum Beispiel Umsetzung eines Isocyanatprepolymeren mit einem Gemisch von sterisch gehindertem aromatischen Diamin und einem Polyethertriol.

Am Ende der Kettenverlängerungsreaktionen liegen im Produkt isocyanatreaktive Gruppen vor, deren Konzentration ungefähr derjenigen des oberflächendesaktivierten festen Isocyanats entspricht. Es kann aber auch ein Unterschuss an isocyanatreaktiven Gruppen vorhanden sein.

Ein Überschuss an Isocyanatgruppen des oberflächendesaktivierten festen Isocyanats ist generell bevorzugt, da ein Überschuss an Isocyanatgruppen zur Haftung auf Substratoberflächen beiträgt und die Temperatur- und Hydrolysebeständigkeit aufgrund von zusätzlichen Quervernetzungen des Polymers ansteigt.

Das Equivalentverhältnis der Isocyanatgruppen des festen Isocyanats zu den isocyanatreaktiven Gruppen im Gemisch nach Ende der Kettenverlängerungsreaktion soll üblicherweise 0.9 bis 3 sein. Diese Verhältnisse können aber auch wesentlich abweichen, und das aus folgendem Grund: Oligomere und Polymere können sich in der Funktionalität unterscheiden und funktionelle Gruppen mit verschiedener Reaktivität (wie primäre und sekundäre Hydroxyl- und Aminogruppen) tragen. Erfindungsgemäss stehen in der Regel mindestens so viele isocyanatreaktive Gruppen für die Reaktion mit den Isocyanatgruppen des festen Isocyanats zur Verfügung, dass bei der Vernetzung oberhalb der Reaktionstemperatur ein unschmelzbares vernetztes Polymersystem entsteht.

Ein wesentliches Merkmal der vorliegenden Erfindung ist es, dass das isocyanatreaktive Polymer (D) erst nach Dispersion des Polyisocyanats (A) in einer der Ausgangskomponenten (B) oder (C) aufgebaut wird. Deshalb müssen die Komponenten (B) und (C) so gewählt werden, dass es erst nach Mischung der Komponenten (B) und (C) zu einer Reaktion zwischen den in diesen enthaltenen funktionellen Gruppen unter Bildung des Polymers (D) kommt. In Tabelle 1 sind erfindungsgemässe Beispiele für die Auswahl der Reaktionsmischungen (i) und (ii) angegeben:

Tabelle 1

| SDSI = Abkürzung für oberflächendesaktiviertes festes Isocyanat (surface deactivated solid isocyanate). | | |
|---|---|---|
| **Reaktionsmischung (i)** | **Reaktionsmischung (ii)** | **Produkt der Kettenverlängerungsreaktion nach Mischen von (i) und (ii)** |
| SDSI, dispergiert in Poly-ester- oder Polycaprolactonpolyol | Unterschuss von Isocyanatprepolym er oder Quasi-Prepolymer auf Basis Polyester- oder Polycaprolacton-polyol | SDSI, dispergiert in festen Polyurethan mit Überschuss an endständigen Hydroxyl-gruppen |
| SDSI, dispergiert in einem Überschuss von sterisch gehindertem aromatischen Diamin z.B. Diethyl-toluy- lendiamin | Unterschuss an TDI-Prepolymer auf Basis Polyetherpolyol | SDSI, dispergiert in festem Polyurethan/Polyharns toff mit endständigen aromatischen sterisch gehinderten Amino endgruppen |

Das oberflächendesaktivierte feste Isocyanat (in der Tabelle mit SDSI abgekürzt) nimmt an den Kettenverlängerungsreaktionen nicht teil.

Sowohl die Kettenverlängerungsreaktion zwischen den Komponenten (B) und (C) als auch die Vernetzungsreaktion zwischen dem Polyisocyanat (A) und dem Polymer (D) können durch Katalysatoren beschleunigt werden. Erfindungsgemäss können verwendet werden: Metallkatalysatoren wie organische Zinn(II)-, Zinn(IV)-, Eisen-, Blei-, Kobalt-, Wismuth-, Antimon-, Zink-, Magnesium-Verbindungen; oder Aminkatalysatoren wie tertiäre Amine, Diazabicyclooctan (Dabco) sowie Diazabicyclo-undecen (DBU). Die Katalysatoren werden in der Regel in einer Menge zwischen 0,001 und 1 Gewichtsprozenten, bezogen auf die Gesamtzusammensetzung, eingesetzt.

Die beiden Reaktionsmischungen (i) und (ii) werden bei Raumtemperatur oder bei erhöhten Temperaturen gemischt, welche a) über dem Erweichungsbereich der funktionellen Polymeren (B) und (C), b) aber mindestens 20 °C unter der Vernetzungstemperatur des festen oberflächendesaktivierten Isocyanats liegen. Die Vermischung erfolgt in statischen oder dynamischen Mischern. Im dynamischen Mischer soll die Rührgeschwindigkeit so eingestellt werden, dass keine hohen Scherkräfte auftreten.

Im gemischten Zustand bilden die beiden Reaktionsmischungen (i) und (ii) zunächst eine Masse, deren Viskosität niedrig ist. Nach Einsetzen der Kettenverlängerungsreaktion aufgrund der chemischen Reaktion der funktionellen Gruppen (b') und (c') steigt die Viskosität des Reaktionsgemisches an. Die Kettenverlängerungsreaktion führt zu einer schmelzbaren Masse mit einem Erweichungspunkt, der über der Raumtemperatur und vorzugsweise oberhalb 40 °C liegt. Sie enthält die oberflächendesaktivierten festen Isocyanate (A) und Oligomere oder Polymere (D) mit isocyanatreaktiven Gruppen (d'), vorzugsweise Hydroxyl- oder Aminogruppen.

Gemäss der vorliegenden Erfindung soll unter Raumtemperatur eine Temperatur von $23 \pm 2$ °C verstanden werden.

Die isocyanatreaktiven Gruppen im Polymer (D) können aus den Ausgangskomponenten (B) oder (C) stammen oder erst durch die Kettenverlängerungsreaktion entstehen. Als Beispiel dient die 1:1-Addition von Ethanolamin an eine Epoxygruppe. Das Reaktionsprodukt enthält sekundäre Aminogruppen sowie primäre und sekundäre Hydroxylgruppen.

Die isocyanatreaktiven Gruppen reagieren erst mit den Isocyanatgruppen des Polyisocyanats (A), wenn die Zusammensetzung auf eine Temperatur erwärmt wird, welche der Vernetzungs- oder Aufdickungstemperatur entspricht.

Der Kettenverlängerungsprozess kann durch Verfestigung oder Kristallisation von Komponenten überlagert werden, wobei die Kettenverlängerungsreaktion auch in festem Zustand weitergehen soll.

Die resultierende Schmelzmasse ist latent wärmereaktiv oder heissvernetzend. Das heisst, wenn die Masse über die Vernetzungstemperatur oder Aufdickungstemperatur von beispielsweise über 60 °C erhitzt wird, werden die oberflächendesaktivierten Isocyanate (A) freigesetzt und können mit den isocyanatreaktiven Gruppen (d') des Polymers D reagieren. Es resultiert ein hochmolekularer und vernetzter Kunststoff, der zum Beispiel als Klebestoff, Dichtmasse oder Beschichtung verwendet werden kann.

Zum Reaktivsystem können auch Hilfs- und Zusatzstoffe zugegeben werden. Erfindungsgemäss kommen hierfür in Frage: Polymere ohne isocyanatreaktive Gruppen, geringe Mengen Lösungsmittel, Weichmacher, Verschnittmittel und Harze, Pigmente, Farbstoffe, Füllstoffe, pyrogene Kieselsäure, Russ, kurzgeschnittene Fasern, Kohle- oder Metallfasern, Metallpulver, Metalloxide, Ferrite, Titanate, Alterungsschutzmittel, Lichtschutzmittel, Hydrolyseschutzmittel, fungistatisch oder bakteriostatisch wirksame Stoffe, Additive zur Steuerung der Viskosität, Thixotropiemittel, Netzmittel oder Haftmittel. Diese Additive und ihre Wirkung in Schmelzmassen sind dem Fachmann bekannt.

Das Endprodukt der Kettenverlängerungsreaktion soll ein Feststoff mit Schmelz- oder Erweichungspunkt über der Raumtemperatur und vorzugsweise oberhalb 40 °C sein. Der Feststoff kann sich auch erst durch die (der Mischung der Komponenten folgende) Kettenverlängerungsreaktion verzögert bilden.

Es hat sich von Vorteil erwiesen, wenn mindestens eine der Komponenten (B) oder (C) bei Raumtemperatur als Feststoff vorliegt, besonders die mengenmässig grössere. Nach dem Verlassen des Mischaggregates (statischer oder dynamischer Mischer) kann sich die Mischung durch Abkühlen physikalisch verfestigen oder kristallisieren, auch wenn die Kettenverlängerungsreaktion noch nicht abgeschlossen ist. Die weitere Verarbeitung in der Form eines (wenn möglich klebfreien) Feststoffs ist üblicherweise viel einfacher als das Umgehen mit einem flüssigen (und klebrigen) Gemisch.

Die weitere Verarbeitung der heisshärtenden Zusammensetzung kann nach dem Mischen der Ausgangskomponenten in verschiedenen zeitlichen Phasen nach verschiedenen Verfahren vorgenommen werden. Die Verarbeitung ist beim Mischen, vor, während oder nach Ende der Kettenverlängerungsreaktion im flüssigen (oberhalb des Erweichungspunktes der Komponenten oder des Endproduktes) oder festen Zustand möglich.

Das erfindungsgemässe Verfahren ermöglicht somit, dass die weitere Verarbeitung der Zusammensetzung vor dem Abschluss der Kettenverlängerungsreaktion vorgenommen werden kann, wenn die Viskosität im Vergleich zu derjenigen des Endproduktes nach dem Ende der Kettenverlängerungsreaktion noch niedrig ist und die damit verbundene niedere Verarbeitungstemperatur die Lagerstabilität günstig beeinflusst.

Das flüssige Gemisch, welches das Mischaggregat verlässt, kann wie folgt weiterverarbeitet werden:

a) Durch Austragen auf ein Band aus Metall, Kunststoff oder dehäsivem Papier, zum Beispiel silikonisiertes Papier, wo es durch Kristallisation erstarrt. Nachher kann es durch Mahloperationen zu latent heissvernetzendem Schmelzpulver für Klebe- und Beschichtungszwecke verarbeitet werden.

b) Alternativ kann es als trägerfreie reaktive Schmelzmasse verwendet werden, zum Beispiel als Film, als Raupe, als Beschichtung, als Granulat oder als ungeformter Körper.

c) Durch Auftragen mit Düsen mit definierter Schichtdicke auf Substrate, wo es eine feste Schicht eines vorapplizierten latent heisshärtenden Schmelzklebers bildet.

d) Durch Auftragen oberhalb des Erweichungspunktes durch beispielsweise graphische Druckverfahren zum Beispiel in Form von Punkten oder Rasterpunkten mit verschiedenem Durchmesser auf Substrate und anschliessende Kühlung. Falls das Substrat ein Band aus dehäsivem Metall, Kunststoff oder dehäsivem Papier ist, kann durch dieses Verfahren unter Verzicht auf Mahloperationen ein latent heisshärtendes monodisperses Pulver mit definierter mittlerer Korngrösse gewonnen werden.

e) Durch ein- oder zweiseitiges Auftragen oder Imprägnierung auf textile oder metallische Bänder, Gewebe, Gitter, Nonwovens, Folien, Papier unter Ausbildung fester vorimprägnierter Klebefolien oder Bänder.

f) Durch "Spinspray" des flüssigen Gemisches mit rotierenden Tellern oder Glocken und Verfestigung in Kugelform in der Kühlluft.

Auf diese Weise sind heisshärtbare Zusammensetzungen in Form sehr kleiner Partikel oder sehr dünner Schichten ohne zusätzlichen Mahl- oder Walzvorgang erhältlich. Bei den bekannten heisshärtbaren Zusammensetzungen sind Partikel mit einer mittleren Grösse von weniger als 500 μm nur dadurch erhältlich, dass man die auf ein Substrat aufgetragene Zusammensetzung abträgt und anschliessend nach bekannten Verfahren zerkleinert, z.B. durch ein übliches Mahlverfahren. Da hierbei erhebliche Scherkräfte und höhere Temperaturen auf die heisshärtbare Zusammensetzung einwirken, kommt es zu einer gewissen Schädigung der desaktivierenden Oberflächenschicht auf den Isocyanatpartikeln und somit zu einer Beeinträchtigung der Lagerstabilität der Partikel der heisshärtbaren Zusammensetzung.

Diese Nachteile werden gemäss der vorliegenden Erfindung vermieden durch ein Verfahren zur Herstellung einer heisshärtbaren Zusammensetzung in Form von Partikeln mit einer Grösse von weniger als 500 μm, vorzugsweise weniger als 300 μm, umfassend die Schritte

a) Bereitstellung einer Reaktionsmischung (i), enthaltend mindestens eine Komponente (B), ausgewählt aus der Gruppe bestehend aus Monomeren, Oligomeren, Prepolymeren und niedermolekularen Polymeren mit funktionellen Gruppen (b'), sowie ein an der Oberfläche desaktiviertes festes Polyisocyanat (A), welches unter den Reaktionsbedingungen bei den Schritten a) bis d) inert ist und in der Komponente (B) dispergiert ist;

b) Zusammenfügen einer Reaktionsmischung (ii) umfassend mindestens eine Komponente (C), ausgewählt aus der Gruppe bestehend aus Monomeren, Oligomeren, Prepolymeren und niedermolekularen Polymeren mit funktionellen Gruppen (c'), mit der Reaktionsmischung (i), wobei durch die Reaktion der Komponenten (B) und (C) mindestens ein Oligomer oder Polymer (D) mit isocyanatreaktiven Gruppen (d') mit einem höheren Molekulargewicht als die Komponenten (B) oder (C) erhalten wird, wobei das mindestens eine Polyisocyanat (A) in dem mindestens einem Oligomer oder Polymer (D) dispergiert ist;

c) Auftragen des in Schritt b) erhaltenen Gemisches aus den Reaktionsmischungen (i) und (ii) vor der vollständigen Bildung des Polymers (D) und oberhalb des Erweichungspunktes auf ein Substrat; und

d) Entfernen der Partikel vom Substrat nach Abkühlung und nachfolgender vollständiger Bildung des Polymers (D).

Im Schritt c) kann das Gemisch aus den Reaktionsmischungen (i) und (ii) vor der vollständigen Bildung des Polymers (D) und oberhalb des Erweichungspunktes gemäss der vorliegenden Erfindung vorzugsweise in Form von Punkten oder Rasterpunkten mit einem Durchmesser von weniger 500 um, vorzugsweise weniger 300 um, auf ein Substrat durch ein Druckverfahren, vorzugsweise ein graphisches Druckverfahren, aufgetragen werden. Gemäss der vorliegenden Erfindung kann hierbei jedes gängige Druckverfahren herangezogen werden, mit dem Punkte bzw. Rasterpunkte mit einem Durchmesser von weniger als 500 μm, vorzugsweise weniger 300 μm, bereitgestellt werden können. Als Beispiel können genannt werden: Hochdruck, Tiefdruck, Hotmelt-Inkjet, Siebdruck (Meltprint, Hotmelt-Screenprint), Tamponprintverfahren.

Gemäss der vorliegenden Erfindung sind Angabe zur Partikelgrössen wie folgt zu verstehen: Partikel mit einer Grösse von weniger als 500 μm sind sämtliche Partikel, die durch ein Sieb mit Sieböffnungen von 0,5 mm (gemäss DIN ISO 3310-1:1992-02) hindurchtreten können.

Nach Abkühlung und Verfestigung können die so erhaltenen Partikel der heisshärtbaren Zusammensetzung auf einfache Weise vom Substrat entfernt werden, beispielsweise durch Abschaben. Die erfindungsgemässen Partikel sind deutlich lagerstabiler als gemahlene Partikel einer herkömmlichen latent reaktiven Zusammensetzung, da aufgrund ihrer Herstellung die desaktivierende Oberflächenschicht des Polyisocyanats nicht beeinträchtigt ist.

Hinsichtlich der die Reaktionsmischungen (i) und (ii) betreffenden Merkmale wird auf die vorstehenden Ausführungen verwiesen.

Gemäss der vorliegenden Erfindung wird zudem ein Verfahren zur Herstellung eines Substrats bereitgestellt, welches eine heisshärtbare Zusammensetzung in Form einer Dünnschicht mit einer Dicke von weniger als 500 μm auf mindestens einer seiner Oberflächen aufweist, umfassend die Schritte

a) Bereitstellung einer Reaktionsmischung (i), enthaltend mindestens eine Komponente (B), ausgewählt aus der Gruppe bestehend aus Monomeren, Oligomeren, Prepolymeren und niedermolekularen Polymeren mit funktionellen Gruppen (b'), sowie ein an der Oberfläche desaktiviertes festes Polyisocyanat (A), welches unter den Reaktionsbedingungen bei den Schritten a) bis c) inert ist und in der Komponente (B) dispergiert ist;

b) Zusammenfügen einer Reaktionsmischung (ii) umfassend mindestens eine Komponente (C), ausgewählt aus der Gruppe bestehend aus Monomeren, Oligomeren, Prepolymeren und niedermolekularen Polymeren mit funktionellen Gruppen (c'), mit der Reaktionsmischung (i), wobei durch die Reaktion der Komponenten (B) und (C) mindestens ein Oligomer oder Polymer (D) mit isocyanatreaktiven Gruppen (d') mit einem höheren Molekulargewicht als die Komponenten (B) oder (C) erhalten wird, wobei das mindestens eine Polyisocyanat (A) in dem mindestens einen Oligomer oder Polymer (D) dispergiert ist;

c) Auftragen des in Schritt b) erhaltenen Gemisches aus den Reaktionsmischungen (i) und (ii) vor der vollständigen Bildung des Polymers (D) und oberhalb des Erweichungspunktes auf ein Substrat in Form einer Dünnschicht mit einer Dicke von weniger 500 μm auf mindestens eine Oberfläche eines Substrats mit Hilfe mindestens einer Düse, Rakel oder Walze.

Hinsichtlich der die Reaktionsmischungen (i) und (ii) betreffenden Merkmale wird auf die vorstehenden Ausführungen verwiesen.

Auf diese Weise können gemäss der vorliegenden Erfindung Substrate mit einer dünnen Schicht einer latent reaktiven Zusammensetzung überzogen werden. Um mit herkömmlichen latent reaktiven Zusammensetzungen derartig dünne Schichten zu erreichen, sind Verfahren erforderlich, bei denen erhebliche Scherkräfte auf die heisshärtbare Zusammensetzung einwirken. Es kann dabei zu einer gewissen Abtragung der desaktivierenden Oberflächenschicht auf den Isocyanatpartikeln und somit zu einer Beeinträchtigung der Lagerstabilität der Dünnschicht aus der heisshärtbaren Zusammensetzung kommen. Im Gegensatz hierzu sind die erfindungsgemäss erhaltenen Dünnschichten aus einer latent reaktiven Zusammensetzung aufgrund ihrer Herstellung deutlich lagerstabiler.

Die in Schritt c) durchzuführende Auftragung mit Düsen, Rakeln oder Walzen erfolgt nach gängigen Methoden, welche dem Fachmann bekannt sind.

Gemäss diesem Verfahren können beispielsweise Substrate bereitgestellt werden, die auf einer oder zwei Oberflächen eine wie vorstehend beschrieben aufgetragene Dünnschicht aufweisen. Beidseitig beschichtete Substrate können eine sehr geringe Dicke aufweisen und eignen sich deshalb sehr gut als Klebverbindung zum Verbinden zweier Teile. Beispielsweise kann es sich bei dem beschichteten Substrat um ein Papier, Vlies, eine Folie, eine Metallfolie, ein Gewebe, ein dünnes Netz aus Kunststoff handeln, das beidseitig gemäss dem vorstehend beschriebenen Verfahren beschichtet ist. Die erfindungsgemässe Dünnschicht kann aber auch einseitig aufgetragen werden, beispielsweise auf Holzfourniere oder Metallfolien, um diese mit anderen Materialien zu verkleben.

Das frische Reaktionsgemisch erlaubt auch das Imprägnieren von Endlosfasern, Stapelfasern, Papier, Vliesen und Gewirken aus Naturfasern, Kunstfasern, Glasfasern, Kohlefasern, Metallfasern, welche als heisshärtende Klebstoffe, Klebfolien oder Klebebänder dienen.

Die erfindungsgemässen Massen sind bei Raumtemperatur mehr als 1 Monat, bei leicht erhöhten Temperaturen im Bereich von 30 - 45 °C mehr als 10 Tage lagerfähig und heissvernetzbar. Sie müssen nicht vor Luftfeuchtigkeit geschützt werden.

Bei Erreichen der Schmelz- oder Erweichungstemperatur des Polymers (D) verflüssigen sich die heisshärtenden Zusammensetzungen. In diesem Zustand können sie Substratoberflächen oder Haftflächen benetzen. Bei Erreichen der Vernetzungs- oder Aufdickungstemperatur des festen, desaktivierten Isocyanats, welche höher sein soll als die Schmelz- oder Erweichungstemperatur des Polymers, vernetzen die heisshärtenden Zusammensetzungen irreversibel zu unschmelzbaren, hochmolekularen Polyurethanen oder Polyharnstoffen. Die Vernetzungs- oder Aufdickungstemperatur soll im Bereich von 60 bis 150 °C liegen, bevorzugt zwischen 70 und 140 °C.

In Abhängigkeit von den eingesetzten Komponenten können gemäss der vorliegenden Erfindung heisshärtende Zusammensetzungen bereitgestellt werden, bei denen

a) bei Erreichen der Schmelz- oder Erweichungstemperatur des Polymers (D) bereits die Vernetzung zu unschmelzbaren, hochmolekularen Polyurethanen oder Polyharnstoffen eintritt.

b) bei Erreichen der Schmelz- oder Erweichungstemperatur noch keine Vernetzung eintritt. Die Vernetzung zu unschmelzbaren, hochmolekularen Polyurethanen oder Polyharnstoffen erfolgt erst bei Erreichen der Vernetzungs- oder Aufdickungstemperatur des festen, desaktivierten Isocyanats, welche über der Schmelz- oder Erweichungstemperatur des Polymers (D) liegt.

Die Wärmezufuhr ins System von Schmelzmassen und/oder Substrat(en) kann mit konventionellen Mitteln, wie beheizter Luft, beheizten Gasen, durch Wärme- oder Infrarotstrahlung, Kontaktwärme, Ausnützen von Restwärme von Substraten erfolgen, oder induktiv, mit Mikrowellen, mit Widerstandsheizung, durch Reibung, durch Ultraschalleinwirkung erfolgen.

Für die Vernetzung durch Wärme, die durch Induktion, durch Mikrowellen oder durch Widerstandsheizung erzeugt wird, hat es sich von Vorteil erwiesen, wenn dem Schmelzkleber metallische Füllstoffe, Russ, Graphit, Metalloxyde, Kohlefasern, elektrisch leitfähige Fasern, Titanate oder Ferrite, beigegeben werden.

Die vorliegende Erfindung betrifft somit auch ein Verfahren zum Verkleben von Substraten, umfassend die Schritte

a) Bereitstellung einer der vorstehend beschriebenen heisshärtenden Zusammensetzungen oder einer nach einem der vorstehend beschriebenen Verfahren erhältlichen heisshärtenden Zusammensetzung;

b) Auftragen der heisshärtenden Zusammensetzung aus Schritt a) auf ein Substrat unter Erhalt eines latent reaktiven Films;

c) Gegebenenfalls Formung des latent reaktiven Films nach einem der Schritte b) oder c) durch Erhitzen auf die Schmelz- oder Erweichungstemperatur des Polymers (D) ;

d) Erwärmen des latent reaktiven Films auf eine Temperatur, bei welcher die Vernetzungsreaktion zwischen dem Polyisocyanat und den isocyanatreaktiven Gruppen in dem Film eintritt;

e) In Kontakt bringen eines zweiten Substrats mit dem Film nach einem der Schritte b) bis d).

Vorzugsweise erfolgt der Schritt b) vor dem Abschluss der Bildung des Polymers (D).

Die vorliegende Erfindung wird nachstehend anhand von bevorzugten und nicht einschränkenden Beispielen näher veranschaulicht.

**Beispiele**

*Eingesetzte Materialien:*

| 1. Polymerkomponenten | | | |
|---|---|---|---|
| Polymer | Erweichungspunkt (°C) | Hydroxylzahl | g/Eq. |
| Capa 3091 (Polycaprolactontriol) (a) | flüssig | 187 | 300 |
| Capa 2402 (Polycaprolactondiol) (a) | 58 +/- 2 | 28 | 2000 |
| Arcol 1020 (Polypropylenether-diol) (b) | flüssig | 56 | 1000 |
| Arcol 1042 (Polypropylenether-triol) (b) | flüssig | 36 | 1600 |

| 2. Amine | | |
|---|---|---|
| Amin | Amin-NH-equivalent | Erweichungstemperatur (°C) |
| BHMTA-HP (bis-Hexamethylentriamin) (c) | 72 | 33 +/- 2 |
| Amicure PACM (4,4'-Diaminodicyclohexylamin) (d) | 105 | flüssig |
| DETDA 80 (3,5-Diethyl-2,4/2,6-toluylendiamin) (e) | 89 | flüssig |

| 3. Isocyanate | | | | |
|---|---|---|---|---|
| Isocyanat | % NCO | g/Eq. | Schmelzpunkt (°C) | Funktionalität |
| Metalink U (f), TDI-U | 22.5 - 24.5 | ca. 180 | > 150 | 2.0 - 2.1 |
| Metalink H (f), TDI-H | 23.5 - 26 | ca. 170 | > 145 | 2.0 |
| Lupranat MI (ca. 50 %iges Gemisch von 2,4'-, 4,4'-MDI) (g) | 33.2 | 127 | flüssig | 2.0 |
| Desmodur T-100 (2,4-TDI) (h) | 48.3 | 87 | flüssig | 2.0 |

**4. Katalysatoren**

Metatin Katalysator 715 (f), Dibutylzinn-dimercaptid, Metallgehalt ca.18.4 % Zinn

Die eingesetzten Materialien sind erhältlich von:

(a) Solvay Polycaprolactones, GB-Warrington
(b) Lyondell Chemical Nederland, NL-Rotterdam
(c) DuPont Nylon Intermediates, USA-Wilmington
(d) Air Products, GB-Manchester
(e) Lonza AG, CH-Basel
(f) Acima AG, CH-Buchs
(g) BASF, D-Ludwigshafen
(h) Bayer AG, D-Leverkusen

*Prüfmethoden hinsichtlich der Verklebungen*

Bestimmung der Zugscherfestigkeit:

Eine Schmelzkleberschicht von 2 mm wurde auf die Oberfläche eines KTL-grundierten Bleches appliziert.

Die Bleche überlappten auf 25x10 mm$^2$, die Schichtdicke des Klebstoffes wurde durch Abstandhalter aus Teflon auf 0.5 mm eingestellt. Die Temperatur wurde auf 120 °C während 30 Minuten erhöht. Nach 7 Tagen bei Raumtemperatur wurde die Zugscherfestigkeit gemessen (Reissgeschwindigkeit 100 mm/Minute).

Prüfung der Wärmestandfestigkeit der Verklebungen:

Prüflinge mit 100x20x5 mm$^3$ aus Buchenholz wurden einfach überlappend press-verklebt bei Temperaturen, welche mindestens 10 °C oberhalb der Reaktionstemperatur lagen (Ueberlappung: 10 mm, Klebefläche: 20x10 mm$^2$, Lagerung: 7 Tage bei Raumtemperatur).

Für die Bestimmung der Wärmestandfestigkeit wurden die Prüflinge senkrecht in den Umluftofen gehängt und die Prüfstelle mit 0,3 kg belastet. Die Temperatur wurde alle 15 Minuten um 10 °C erhöht. Haftverlust der Klebeflächen führte zum Fallen der Gewichte. Die Obere Prüftemperatur war auf 150 °C begrenzt.

*Beispiel 1: Heissvernetzendes System aus oberflächendesaktiviertem festen Isocyanat, dispergiert in Polyesterpolyolen, verlängert mit Isocyanatprepolymeren*

Es wurden zwei Reaktionsmischungen (i) und (ii) hergestellt, welche bei Raumtemperatur oder leicht erhöhter Temperatur in geschlossenen Gebinden stabil waren.

| Reaktionsmischung (i): | | | |
|---|---|---|---|
| | g / Equivalent | Anzahl Equivalente | Gramm |
| (1 Capa 2402) | 2000 | 2.5 | 5000 |
| (2 Capa 3091) | 300 | 1.5 | 450 |
| (3 BHMTA-HP) | 72 | 0.105 * | 7.56 |
| (4 Metalink U) | 180 | 2.1 | 378 |
| (5 Total Komp. 1) | | | 5835.56 |

* = 5 Eq.-% von (4)

Die Polymeren (1) und (2) wurden auf 70 °C erhitzt und geschmolzen, die Temperatur des Gemisches wurde dann auf 55 °C erniedrigt, das Polyamin (3) zugesetzt, und unter dem Dissolver bei 500 UPM das feste Isocyanat (4) eingemischt und verteilt. Nach 30 Minuten war die Reaktionsmischung (i) verarbeitungsbereit.

Die Reaktionsmischung (i) wies einen Überschuss von 4 Equivalenten an primären Hydroxylgruppen auf. Es waren 2 Equivalente Isocyanat des inerten oberflächendesaktiverten Isocyanats dispergiert.

Viskosität mit dem Rotationsviskosmeter bei 55+/-2 °C: 4600 mPa.s$^{-1}$

Verfestigungstemperatur der Schmelze $\cong$ 48 °C.

| Reaktionsmischung (ii): | | | |
|---|---|---|---|
| | g / Equivalent | Anzahl Equivalente | Gramm |
| (1 Capa 2402) | 2000 | 2.0 | 4000 |
| (2 Lupranat MI) | 127 | 4.2 | 533 |
| (3 Metatin Kat. ) 715 | ---- | --- | 0.23 ** |
| (4 Total Komp. 2) | | | 4533.23 |

** = 0.005 % von (2)

Nach dem Mischen der Bestandteile zeigte das Gemisch einen leichten Temperaturanstieg. Die Reaktion wurde bei 70 °C während 3 Stunden zu Ende geführt. Es entstand ein Prepolymer mit einem theoretischen Überschuss von 2.2 Equivalenten Isocyanat, entsprechend einem Gehalt von 2.04 % NCO-Gruppen. Es wurde ein Gehalt von 1.95 % NCO gefunden.

Viskosität mit dem Rotationsviskosimeter bei 55+/-2 °C: 81'000 mPa.s$^{-1}$

Verfestigungstemperatur der Schmelze $\cong$ 45 °C.

Herstellung der reaktiven Schmelzmasse aus den Reaktionsmischungen (i) und (ii):

In einem rotierenden Mischer (mit gegenläufigen Wendeln, 400 UPM) wurden die Komponenten während 3 Minuten bei 55 °C homogen gemischt.

| Mischungsverhältnis | |
|---|---|
| Reaktionsmischung (i): | 5835.56 g |
| Reaktionsmischung (ii): | 4533.23 g |
| Total Schmelzmasse | 10'368.79 g |

Viskosität mit dem Rotationsviskosimeter bei 55+/-2 °C: 56'000 mPa.s$^{-1}$

Es fand keine Reaktion des festen Isocyanats statt, dagegen konnte auf Grund einer leichten exothermen Reaktion das Einsetzen der Kettenverlängerungsreaktion beobachtet werden. Nach Ablauf der Kettenverlängerungsreaktion enthielten 10'368 g Schmelzmasse rund 2 Equivalente primäre Hydroxylgruppen und 2 Equivalente festes Isocyanat.

Die Masse wurde auf ein Silikonpapier in 2 mm Schichtdicke ausgegossen, wo sie in weniger als 20 Sekunden zu einem klebfreien Film erstarrte, der sich leicht vom Papier trennen und brechen liess. Die Kettenverlängerungsreaktion war nach etwa 3 Tagen beendet. Es entstand ein bei Raumtemperatur lagerstabiler Film, der auch nach 2 Monaten noch bei Temperaturen von über 50 °C schmelzbar war und bei Einwirkung von Temperaturen über 110 °C innerhalb von 5 Minuten zu einer vernetzten Masse mit gutem Rückstellvermögen erstarrte.

Vernetzungsversuche:

Die Wärmestandfestigkeit einer (bei 120 °C und 15 Minuten) vernetzten Pressverklebung wurde an einer Prüffläche von 25 x 25 mm$^2$ und 0.3 kg Belastung gemessen. Es wurde eine Wärmestandfestigkeit von über 150 °C gemessen. Der Abbruch der Bestimmung erfolgte bei 150 °C.

Bestimmung der Zugscherfestigkeit: Gemäss dem vorstehend beschriebenen Verfahren wurde die Zugscherfestigkeit mit einer Temperaturerhöhung auf 120 °C während 20 Minuten bestimmt. Nach 7 Tagen bei Raumtemperatur wurde eine Zugscherfestigkeit von 17.5 MPa gemessen.

*Beispiel 2: Heissvernetzendes System aus oberflächendesaktiviertem festen Isocyanat, dispergiert in einem aminofunktionellen Prepolymer mit sterisch gehindertem aromatischen Amin*

Es wurden zwei Reaktionsmischungen (i) und (ii) hergestellt, welche bei Raumtemperatur oder leicht erhöhter Temperatur in geschlossenen Gebinden stabil waren.

| Reaktionsmischung (i): | | | |
|---|---|---|---|
| | g / Equivalent | Anzahl Equivalente | Gramm |
| (1 DETDA 80) | 89 | 6.3 | 560 |
| (2 Arcol 1042) | 1600 | 0.2 | 320 |
| (3 PACM) | 105 | 0.1 | 10.5 * |
| (4 Metalink U) | 180 | 2.5 | 450 |
| (5 Total Komp. 3A) | | | 1340.5 |

\* = 4 Eq.-% von (4)

Die flüssigen Bestandteile (1) bis (3) wurden vermischt und das feste Isocyanat (4) unter dem Dissolver bei 500 Umdrehungen pro Minute eingetragen. Zur vollständigen Desaktivierung des festen Isocyanats wurde die Reaktionsmischung (i) während 3 Tagen bei Raumtemperatur gelagert. Es entstand eine thixotrope, pseudoplastische, pumpbare Paste.

| Reaktionsmischung (ii): | | | |
|---|---|---|---|
| | g / Equivalent | Anzahl Equivalente | Gramm |
| (1 Arcol 1020) | 1000 | 4.0 | 4000 |
| (2 2,4-TDI) | 87 | 8.4 | 730.8 |
| (3 Metatin Kat.) 715 | --- | --- | 0.235 |
| (4 Total Komp. 3B) | | 4.19 | 4731.035 |

Nach der Prepolymerbildung bei 70 °C während 6 Stunden wurde ein NCO-Gehalt von 3.73 % gemessen, das NCO-Equivalent betrug 1128 g. 4731 g Produkt enthielten 4.19 NCO Equivalente.

Herstellung des heisshärtenden Schmelzklebers aus den Reaktionsmischungen (i) und (ii):

Die beiden Reaktionsmischungen (i) und (ii) wurden mit den obigen Mengenverhältnissen bei einer Temperatur von 25 °C homogen gemischt.

Die Topfzeit betrug 3 Minuten, die Gelzeit 7 Minuten. Nach 11 Minuten war die Oberfläche mit dem Finger berührbar, ohne dass sich Material übertrug. Nach ungefähr einer Stunde wurde eine klebfreie Raupe erhalten, die sich vom Silikonpapier leicht trennen liess.

Die Kettenverlängerungsreaktion war nach weniger als 2 Tagen beendet. Nach Ablauf der Kettenverlängerungsreaktion enthielten 6071 g Schmelzmasse rund 2.1 Equivalente aromatische Aminogruppen, 0.2 Equivalente Hydroxylgruppen des Triols, und etwa 2.45 Equivalente festes oberflächendesaktiviertes Isocyanat.

Es entstand ein bei Raumtemperatur lagerstabiler Film, der auch nach 2 Monaten bei Temperaturen von über 70°C schmelzbar war und bei Einwirkung von Temperaturen über 120 °C innerhalb von 5 Minuten zu einer vernetzten blasenfreien Masse mit gutem Rückstellvermögen erstarrte. Im DSC wurde die Aufdickungstemperatur mit 80 °C bestimmt.

Vernetzungsversuche:

Die Wärmestandfestigkeit einer (bei 120 °C und 15 Minuten) vernetzten Pressverklebung wurde an einer Prüffläche von 25 x 25 mm$^2$ und 0.3 kg Belastung gemessen. Es wurde eine Wärmestandfestigkeit von über 150 °C gemessen. Der Abbruch der Bestimmung erfolgte bei 150 °C.

Bestimmung der Zugscherfestigkeit:

Bestimmung der Zugscherfestigkeit: Gemäss dem vorstehend beschriebenen Verfahren wurde die Zugscherfestigkeit mit einer Temperaturerhöhung auf 120 °C während 20 Minuten bestimmt. Nach 7 Tagen bei Raumtemperatur wurde eine Zugscherfestigkeit von 7.80 MPa gemessen.

Das Beispiel 2 zeigt, dass erfindungsgemässe reaktive Schmelzkleber auf Basis von hydrophilen Polyethern möglich sind, ohne dass bei der Vernetzungsreaktion Blasen infolge Kohlendioxydentwicklung entstehen. Die Blasenfreiheit wird durch die bevorzugte Reaktion der aromatischen Aminogruppen mit den Isocyanatgruppen des festen Isocyanats erzielt.

**Patentansprüche**

1. Verfahren zur Herstellung einer bei Temperaturen oberhalb Raumtemperatur schmelzbaren, heisshärtenden Zusammensetzung, umfassend mindestens ein Polymer mit isocyanatreaktiven Gruppen und mindestens ein an der Oberfläche desaktiviertes, festes Polyisocyanat, **gekennzeichnet durch** die Schritte

   a) Bereitstellung einer Reaktionsmischung (i), enthaltend mindestens eine Komponente (B), ausgewählt aus der Gruppe bestehend aus Monomeren, Oligomeren, Prepolymeren und niedermolekularen Polymeren mit funktionellen Gruppen (b'), sowie ein an der Oberfläche desaktiviertes festes Polyisocyanat (A), welches unter den Reaktionsbedingungen bei den Schritten a) und b) inert ist und in der Komponente (B) dispergiert ist;
   b) Zusammenfügen einer Reaktionsmischung (ii) umfassend mindestens eine Komponente (C), ausgewählt aus der Gruppe bestehend aus Monomeren, Oligomeren, Prepolymeren und niedermolekularen Polymeren mit funktionellen Gruppen (c'), mit der Reaktionsmischung (i), wobei **durch** die Reaktion der Komponenten (B) und (C) mindestens ein Oligomer oder Polymer (D) mit isocyanatreaktiven Gruppen (d') mit einem höheren Molekulargewicht als die Komponenten (B) oder (C) erhalten wird, wobei das mindestens eine Polyisocyanat (A) in dem mindestens einem Oligomer oder Polymer (D) dispergiert ist.

2. Verfahren nach Anspruch 1, **dadurch gekennzeichnet, dass** es sich bei den isocyanatreaktiven Gruppen (d') um Hydroxyl-, primäre oder sekundäre Aminogruppen handelt.

3. Verfahren nach Anspruch 1 oder 2, **dadurch gekennzeichnet, dass** in Schritt b) ein Unterschuss an isocyanatreaktiven Gruppen (d') gegenüber den vorhandenen Isocyanatgruppen erhalten wird, welche im Polyisocyanat (A) enthalten sind.

4. Verfahren nach Anspruch 1 oder 2, wobei in Schritt b) ein Equivalentverhältnis der Isocyanatgruppen des Polyisocyanats (A) zu den isocyanatreaktiven Gruppen (d') von 0.9 bis 3 erhalten wird.

5. Verfahren nach einem der Ansprüche 1 bis 4, wobei die isocyanatreaktiven Gruppen (d') in einer solchen Konzentration vorhanden sind, dass nach Heisshärtung mit den Isocyanatgruppen des Polyisocyanats (A) ein vernetztes Polymer entsteht.

6. Verfahren nach einem der Ansprüche 1 bis 5, wobei das Polyisocyanat (A) ausgewählt ist aus der Gruppe, bestehend aus dimerem Diphenylmethan-2,4'- oder 4,4'-diisocyanat (MDI-U), Naphthalin-1,5-diisocyanat (NDI), 3,3'-Dimethylbiphenyl-4,4'-diisocyanat (TODI), dimerem 1-Methyl-2,4-phenylen-diisocyanat (TDI-U), 3,3'-Diisocyanato-4,4'dimethyl-N,N'-diphenylharnstoff (TDIH), Urethanen erhältlich durch Umsetzung von 2 Mol 1,6-Hexamethlyendiisocyanat und 1 Mol eines kurzkettigen linearen Diols, sowie dem Isocyanurat des IPDI (IPDI-T).

7. Verfahren nach einem der Ansprüche 1 bis 6, wobei die Oberflächendesaktivierung des Polyisocyanats (A) durch ein Desaktivierungsmittel erfolgt, das ausgewählt ist aus der Gruppe, bestehend aus primären und sekundären aliphatischen Aminen, Di- oder Polyaminen, Hydrazinderivaten, Amidinen oder Guanidinen.

8. Verfahren nach Anspruch 7, wobei das Desaktivierungsmittel ausgewählt ist aus der Gruppe, bestehend aus Ethylendiamin, 1,3-Propylendiamin, Diethylentriamin, Triethylentetramin, bis-Hexamethylentriamin, 2,5-Dimethylpiperazin, 3,3'-Dimethyl-4,4'-Diaminodicyclohexylmethan, Methylnonandiamin, Isophorondiamin, 4,4'-Diaminodicyclohexylmethan, Diaminound Triaminopolypropylenether, Polyamidoamine, Polyethylenimin, Aminoalkylalkoxysilane, und Gemischen von Mono-, Di- und Polyaminen.

9. Verfahren nach einem der Ansprüche 1 bis 8, wobei die Komponenten (B) oder (C) Oligomere oder Polymere mit funktionellen Gruppen (b') beziehungsweise (c') sind, ausgewählt aus der Gruppe bestehend aus aliphatischen oder aromatischen Polyestern, Polycaprolactonen, Polycarbonaten, Polyacetalen, Polyacrylaten und -methacrylaten, Polyamiden, Polyurethanen, Polyharnstoffen, Polypropylenethern, Polytetrahydrofuranen, Polythioethern, Polybutadienen, hydrierten Polybutadienen, Fettsäure-basierenden Polyestern, hydroxy- und/oder aminofunktionellen Addukten und Derivaten von Epoxydharzen.

10. Verfahren nach einem der Ansprüche 1 bis 9, wobei mindestens eine Komponente (B) oder (C) ein oder mehrere bei Raumtemperatur flüssige Oligomere oder Polymere umfasst.

11. Verfahren nach einem der Ansprüche 1 bis 10, wobei die Komponente (B) mindestens ein aromatisches oder sterisch gehindertes aromatisches Polyamin umfasst.

12. Verfahren nach Anspruch 11, wobei die Komponente (C) ein Isocyanat-Prepolymer, vorzugsweise ein Isocyanat-Prepolymer auf Polyetherbasis umfasst.

13. Verfahren nach einem der Ansprüche 1 bis 12, wobei einer der Reaktionsmischungen (i) oder (ii) zusätzlich ein Katalysator oder Hilfs- oder Zusatzstoffe zugesetzt sind.

14. Verfahren nach einem der Ansprüche 1 bis 13, wobei eine der Komponenten (B) oder (C) bei Raumtemperatur als Feststoff vorliegt.

15. Verfahren nach einem der Ansprüche 1 bis 14, wobei die Zusammensetzung in Wasser dispergierbar ist.

16. Verfahren zur Herstellung einer heisshärtbaren Zusammensetzung in Form von Partikeln mit einer Grösse von weniger als 500 um, vorzugsweise weniger als 300 um, umfassend die Schritte

    a) Bereitstellung einer Reaktionsmischung (i), enthaltend mindestens eine Komponente (B), ausgewählt aus der Gruppe bestehend aus Monomeren, Oligomeren, Prepolymeren und niedermolekularen Polymeren mit funktionellen Gruppen (b'), sowie ein an der Oberfläche desaktiviertes festes Polyisocyanat (A), welches unter den Reaktionsbedingungen bei den Schritten a) bis d) inert ist und in der Komponente (B) dispergiert ist;
    b) Zusammenfügen einer Reaktionsmischung (ii) umfassend mindestens eine Komponente (C), ausgewählt aus der Gruppe bestehend aus Monomeren, Oligomeren, Prepolymeren und niedermolekularen Polymeren mit funktionellen Gruppen (c'), mit der Reaktionsmischung (i), wobei durch die Reaktion der Komponenten (B) und (C) mindestens ein Oligomer oder Polymer (D) mit isocyanatreaktiven Gruppen (d') mit einem höheren Molekulargewicht als die Komponenten (B) oder (C) erhalten wird, wobei das mindestens eine Polyisocyanat (A) in dem mindestens einem Oligomer oder Polymer (D) dispergiert ist;

c) Auftragen des in Schritt b) erhaltenen Gemisches aus den Reaktionsmischungen (i) und (ii) vor der vollständigen Bildung des Polymers (D) und oberhalb des Erweichungspunktes auf ein Substrat; und

d) Entfernen der Partikel vom Substrat nach Abkühlung und nachfolgender vollständiger Bildung des Polymers (D).

17. Verfahren nach Anspruch 16, **dadurch gekennzeichnet, dass** in Schritt c) das Gemisch aus den Reaktionsmischungen (i) und (ii) vor der vollständigen Bildung des Polymers (D) und oberhalb des Erweichungspunktes in Form von Punkten oder Rasterpunkten mit einem Durchmesser von weniger als 500 µm, vorzugsweise weniger als 300 µm, auf ein Substrat durch ein Druckverfahren aufgetragen wird.

18. Verfahren nach Anspruch 17, **dadurch gekennzeichnet, dass** das Druckverfahren ein graphisches Druckverfahren ist.

19. Heisshärtbare Zusammensetzung in Form von unzerkleinerten Partikeln mit einer Grösse von weniger als 500 µm, vorzugsweise weniger als 300 µm, erhältlich nach dem Verfahren gemäss einem der Ansprüche 16 bis 18.

20. Verfahren zur Herstellung eines Substrats, welches eine heisshärtbare Zusammensetzung in Form einer Dünnschicht mit einer Dicke von weniger als 500 µm auf mindestens einer seiner Oberflächen aufweist, umfassend die Schritte

a) Bereitstellung einer Reaktionsmischung (i), enthaltend mindestens eine Komponente (B), ausgewählt aus der Gruppe bestehend aus Monomeren, Oligomeren, Prepolymeren und niedermolekularen Polymeren mit funktionellen Gruppen (b'), sowie ein an der Oberfläche desaktiviertes festes Polyisocyanat (A), welches unter den Reaktionsbedingungen bei den Schritten a) bis c) inert ist und in der Komponente (B) dispergiert ist;

b) Zusammenfügen einer Reaktionsmischung (ii) umfassend mindestens eine Komponente (C), ausgewählt aus der Gruppe bestehend aus Monomeren, Oligomeren, Prepolymeren und niedermolekularen Polymeren mit funktionellen Gruppen (c'), mit der Reaktionsmischung (i), wobei durch die Reaktion der Komponenten (B) und (C) mindestens ein Oligomer oder Polymer (D) mit isocyanatreaktiven Gruppen (d') mit einem höheren Molekulargewicht als die Komponenten (B) oder (C) erhalten wird, wobei das mindestens eine Polyisocyanat (A) in dem mindestens einem Oligomer oder Polymer (D) dispergiert ist;

c) Auftragen des in Schritt b) erhaltenen Gemisches aus den Reaktionsmischungen (i) und (ii) vor der vollständigen Bildung des Polymers (D) und oberhalb des Erweichungspunktes auf ein Substrat in Form einer Dünnschicht mit einer Dicke von weniger 500 µm auf mindestens eine Oberfläche eines Substrats mit Hilfe mindestens einer Düse, Rakel oder Walze.

21. Heisshärtbare Zusammensetzung in Form einer ungewalzten Dünnschicht mit einer Dicke von weniger 500 µm, erhältlich nach dem Verfahren gemäss Anspruch 20.

22. Heisshärtende Zusammensetzung nach einem der Ansprüche 19 oder 21 oder erhältlich nach einem Verfahren gemäss einem der Ansprüche 1 bis 15, **dadurch gekennzeichnet, dass** bei Erreichen der Schmelz- oder Erweichungstemperatur des Polymers (D) bereits die Vernetzung zu unschmelzbaren, hochmolekularen Polyurethanen oder Polyharnstoffen einsetzt.

23. Heisshärtende Zusammensetzung nach einem der Ansprüche 19 oder 21 oder erhältlich nach einem Verfahren gemäss einem der Ansprüche 1 bis 15, **dadurch gekennzeichnet, dass** die Vernetzung zu unschmelzbaren, hochmolekularen Polyurethanen oder Polyharnstoffen erst bei Erreichen der Vernetzungsoder Aufdickungstemperatur des festen, desaktivierten Isocyanats erfolgt, welche über der Schmelz- oder Erweichungstemperatur des Polymers (D) liegt.

24. Substrat, umfassend auf mindestens einer seiner Oberflächen eine heisshärtbare Zusammensetzung gemäss Anspruch 21.

25. Substrat nach Anspruch 24, **dadurch gekennzeichnet**, das es sich um ein Papier, Vlies, eine Folie, eine Metallfolie, ein Gewebe, ein Netz aus Kunststoff oder um ein Fournier handelt, das einseitig oder beidseitig mit einer heisshärtbaren Zusammensetzung gemäss Anspruch 20 überzogen ist.

26. Kit, umfassend mindestens zwei voneinander getrennte Kompartimente, wobei ein erstes Kompartiment eine Reaktionsmischung (i), umfassend mindestens ein an der Oberfläche desaktiviertes festes Polyisocyanat (A) und mindestens eine Komponente (B), ausgewählt aus der Gruppe bestehend aus Monomeren, Oligomeren und niedermolekularen Polymeren mit funktionellen Gruppen (b'); und ein zweites Kompartiment eine Reaktionsmischung (ii) umfassend mindestens eine Komponente (C), ausgewählt aus der Gruppe bestehend aus Monomeren, Oligomeren und niedermolekularen Polymeren mit funktionellen Gruppen (c'), enthält.

27. Kit nach Anspruch 26, **dadurch gekennzeichnet, dass** mindestens eines von zwei voneinander getrennten Kompartimenten feuchtigkeitsundurchlässig ist.

28. Kit nach Anspruch 26 oder 27, **dadurch gekennzeichnet, dass** die Reaktionsmischungen (i) und (ii) in dem jeweiligen Kompartiment bei Raumtemperatur bzw. bei Temperaturen unterhalb der Vernetzungstemperatur des Polyisocyanats lagerstabil sind.

29. Verfahren zum Verkleben von Substraten, umfassend die Schritte

a) Bereitstellung einer heisshärtenden Zusammensetzung nach einem der Ansprüche 19 oder 21 bis 23 oder einer nach einem Verfahren gemäss einem der Ansprüche 1 bis 15 erhältlichen heisshärtenden Zusammensetzung;
b) Auftragen der heisshärtenden Zusammensetzung aus Schritt a) auf ein Substrat unter Erhalt eines latent reaktiven Films;
c) Gegebenenfalls Formung des latent reaktiven Films nach einem der Schritte b) oder c) durch Erhitzen auf die Schmelz- oder Erweichungstemperatur des Polymers (D) ;
d) Erwärmen des latent reaktiven Films auf eine Temperatur, bei welcher die Vernetzungsreaktion zwischen dem Polyisocyanat und den isocyanatreaktiven Gruppen in dem Film eintritt;
e) In Kontakt bringen eines zweiten Substrats mit dem Film nach einem der Schritte b) bis d).

30. Verfahren nach Anspruch 29, **dadurch gekennzeichnet, dass** der Schritt b) vor dem Abschluss der Bildung des Polymers (D) erfolgt.

31. Verwendung einer Zusammensetzung gemäss einem der Ansprüche 19 oder 21 bis 23 oder einer nach einem Verfahren gemäss einem der Ansprüche 1 bis 15 hergestellten Zusammensetzung zur Herstellung eines Klebstoffs.

32. Verwendung einer Zusammensetzung gemäss einem der Ansprüche 19 oder 21 bis 23 oder einer nach einem Verfahren gemäss einem der Ansprüche 1 bis 15 hergestellten Zusammensetzung zur Herstellung einer Dichtmasse.

33. Verwendung einer Zusammensetzung gemäss einem der Ansprüche 19 oder 21 bis 23 oder einer nach einem Verfahren gemäss einem der Ansprüche 1 bis 15 hergestellten Zusammensetzung zur Herstellung einer Beschichtung.

34. Verwendung eines Substrats gemäss Anspruch 24 oder 25 zum Zusammenfügen von Teilen.

**EP 1 386 936 A1**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 143 987 A (AREND GUENTER ET AL) 1. September 1992 (1992-09-01) * Spalte 6, Zeile 1 - Zeile 5 * * Spalte 8, Zeile 44 - Zeile 61 * * Spalte 10, Zeile 14 * --- | 1,26 | C08G18/10 C08G18/70 |
| D,X | US 5 077 339 A (HESS HEINRICH ET AL) 31. Dezember 1991 (1991-12-31) * Beispiele 7,8 * --- | 1,26 | |
| D,X | US 4 483 974 A (GROEGLER GERHARD ET AL) 20. November 1984 (1984-11-20) * Beispiel 14 * * Spalte 11, Zeile 47 * ----- | 1,19,26 | |

**RECHERCHIERTE SACHGEBIETE (Int.Cl.7)**

C08G

Der vorliegende Recherchenbericht wurde für alle Patentansprüche erstellt

| Recherchenort | Abschlußdatum der Recherche | Prüfer |
|---|---|---|
| MÜNCHEN | 5. Dezember 2002 | Müller, M |

**ANHANG ZUM EUROPÄISCHEN RECHERCHENBERICHT
ÜBER DIE EUROPÄISCHE PATENTANMELDUNG NR.**                EP 02 40 5662

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-12-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 5143987 | A | 01-09-1992 | DE | 3930138 A1 | 21-03-1991 |
| | | | CA | 2024287 A1 | 10-03-1991 |
| | | | EP | 0417540 A2 | 20-03-1991 |
| | | | JP | 3106981 A | 07-05-1991 |
| US 5077339 | A | 31-12-1991 | DE | 3940271 A1 | 13-06-1991 |
| | | | CA | 2031224 A1 | 07-06-1991 |
| | | | EP | 0431413 A2 | 12-06-1991 |
| | | | JP | 4100815 A | 02-04-1992 |
| US 4483974 | A | 20-11-1984 | DE | 3230757 A1 | 23-02-1984 |
| | | | AT | 31409 T | 15-01-1988 |
| | | | BR | 8304460 A | 27-03-1984 |
| | | | CA | 1193493 A1 | 17-09-1985 |
| | | | DE | 3374933 D1 | 28-01-1988 |
| | | | EP | 0103323 A2 | 21-03-1984 |
| | | | ES | 8404698 A1 | 01-08-1984 |
| | | | HU | 199161 B | 29-01-1990 |
| | | | JP | 1515994 C | 24-08-1989 |
| | | | JP | 59053520 A | 28-03-1984 |
| | | | JP | 63066331 B | 20-12-1988 |
| | | | JP | 1085213 A | 30-03-1989 |
| | | | JP | 1777712 C | 28-07-1993 |
| | | | JP | 4066889 B | 26-10-1992 |

EPO FORM P0461

Für nähere Einzelheiten zu diesem Anhang : siehe Amtsblatt des Europäischen Patentamts, Nr.12/82